Europäisches Patentamt

European Patent Office

Office européen des brevets

(11) Veröffentlichungsnummer: **0 244 597**
**A1**

## (12) EUROPÄISCHE PATENTANMELDUNG

(21) Anmeldenummer: **87103578.8**

(22) Anmeldetag: **12.03.87**

(51) Int. Cl.⁴: **A23L 3/02 , A23L 3/22**

(30) Priorität: **08.04.86 CH 1373/86**

(43) Veröffentlichungstag der Anmeldung:
**11.11.87 Patentblatt 87/46**

(84) Benannte Vertragsstaaten:
**BE CH DE FR GB IT LI NL**

(71) Anmelder: **Neuweiler AG**
**Seestrasse 16**
**8280 Kreuzlingen(CH)**

Anmelder: **Gaignoux, Daniel**
**5, Quai de la République**
**F-94410 St. Maurice(FR)**

(72) Erfinder: **Gaignoux, Daniel**
**5, Quai de la République**
**F-94410 St. Maurice(FR)**
Erfinder: **Sievi, Herbert**
**Langhaldenstrasse 37**
**CH-8280 Kreuzlingen(CH)**

(74) Vertreter: **Schmauder, Klaus Dieter et al**
**c/o Schmauder & Wann Patentanwaltsbüro**
**Nidelbadstrasse 75**
**CH-8038 Zürich(CH)**

(54) **Vorrichtung zur hydraulischen Förderung von Körpern und Verwendung der Vorrichtung.**

(57) Ein Förderkanal (76) verbindet eine Einlassschleuse (74) mit einem freien Auslass (82), wobei der Förderkanal (76) zunächst durch einen Sterilisationsbereich (78) und weiter durch einen Kühlbereich (80) verläuft. Im Kühlbereich (80) enthält die Förderleitung Widerstandsbereiche (94, 96). Dadurch ist es möglich, den Förderdruck im Förderkanal (76) gegen den Auslass (82) soweit abzubauen, dass im Förderkanal (76) sterilisierte Packungen praktisch drucklos den Auslass (82) verlassen können.

Fig.10

## Vorrichtung zur hydraulischen Förderung von Körpern und Verwendung der Vorrichtung

Die Erfindung betrifft eine Vorrichtung gemäss dem Oberbegriff des Anspruches 1 sowie eine Verwendung der Vorrichtung gemäss Anspruch 11.

Vorrichtungen der eingangs genannten Art sind bekannt, so beispielsweise bei der Verwendung in einer Anlage gemäss der DE-PS 21 49 122. Je nach zu sterilisierenden Packungen ist im Sterilisationsbereich ein Flüssigkeitsdruck erforderlich, der dem Innendruck in der Packung entgegenwirkt, um eine Zerstörung der Verpackung zu verhindern. Dieser durch die Flüssigkeit erforderlicher Ueberdruck muss im Kühlbereich im Zuge der Abkühlung soweit wieder abgebaut werden, bis am Auslass des Förderkanals praktisch Umgebungsdruck herrscht. Die auf die Packung einwirkenden Drücke werden einerseits durch den hydrodynamischen Druck bewirkt, der durch die Fördergeschwindigkeit des Flüssigkeitsstromes gegeben ist, und andererseits durch den hydrostatischen Druck der Flüssigkeitssäule in der Anlage. Um die relativ hohen Drücke im Sterilisations-und Kühlbereich auf-und wieder abbauen zu können, ist es erforderlich, die Förderkanäle im Kühlbereich zu einem relativ hohen Turm anzuordnen, sodass bei der Förderung der Packungen von unten nach oben der entsprechende Druckabbau erzielt wird. Solche hohen Türme haben jedoch verschiedene Nachteile. Einerseits erfordern solche Türme sehr stabile Tragkonstruktionen, die die Anlage teuer und aufwendig machen. Zum andern erfordern solche Türme einen erheblichen Aufwand für die Isolierung, wenn in der kalten Jahreszeit dem Einfrieren der Flüssigkeitssäule entgegengewirkt werden soll, insbesondere dann, wenn die Anlage ausserhalb der Arbeitszeit stillgesetzt werden muss. Schliesslich ist es bei solchen Anlagen nicht möglich, den Druckverlauf in dem Förderkanal zu regulieren, da dieser praktisch ausschliesslich durch die hydrostatische Flüssigkeitssäule gegeben ist.

Aufgabe der Erfindung ist es, eine Vorrichtung der eingangs genannten Art so zu verbessern, dass die erwähnten Nachteile vermieden werden.

Die gestellte Aufgabe wird erfindungsgemäss durch die Merkmale des kennzeichnenden Teiles des Anspruches 1 gelöst. Mit der Vorrichtung ist es möglich, den Druck in einem Förderkanal auf einfache Weise derart abzubauen, dass ein Körper den Förderkanal praktisch drucklos verlassen kann, dies auch dann, wenn beispielsweise von oben nach unten gefördert wird.

Vorteilhafte Ausgestaltungen der Vorrichtung sind in den Ansprüchen 2 bis 10 beschrieben.

Im einfachsten Fall können Strömungswiderstände durch die Ausbildung der Vorrichtung nach Anspruch 2 erzeugt werden. Vorteilhaften ist eine Ausgestaltung nach Anspruch 3. Besonders vorteilhaft ist jedoch eine Ausbildung nach Anspruch 4. Die Widerstandswerte lassen sich durch eine Ausbildung des Führungskanals nach Anspruch 5 erhöhen. Sogar in einer Ausbildung nach Anspruch 6 ist ein Widerstandsbereich erzielbar.

Vorteilhaft ist es, wenn die Widerstandselemente nach Anspruch 7 ausgestaltet sind, wobei insbesondere eine Einstellbarkeit der Lamellen eine weitere Steuerung des Widerstandswertes ermöglichen. Solche Lamellen können verschwenkbar oder aus-und einfahrbar sein. Vorteilhaft ist es, wenn diese Einstellbarket manuell oder motorische erfolgt, sodass eine bedarfsweise kontinuierliche Nachregelung möglich ist.

Von Vorteil ist es, wenn die Vorrichtung nach Anspruch 9 ausgestaltet ist, wobei durch den sekundären Flüssigkeitskreislauf eine weitere Steuerung des Druckes in der Vorrichtung ermöglicht wird. Der sekundäre Flüssigkeitsstrom kann direkt dem ersten Flüssigkeitsstrom überlagert werden, wobei auch eine Ausbildung der Vorrichtung nach Anspruch 10 möglich ist, wobei dann eine Ausbildung nach Anspruch 8 von Vorteil ist.

Eine erfindungsgemässe Verwendung der Vorrichtung beschreibt Anspruch 11, wobei insbesondere eine Weiterbildung nach Anspruch 12 von Vorteil ist. Wärmebehandlung sei hier in allgemeinster Form verstanden und beinhalte sowohl Kühlung wie Erhitzung.

Dadurch, dass der Förderkanal bereichsweise Strömungswiderstände zum Abbau des Druckes der Flüssigkeit enthält, ist es möglich, den bisher durch die hydrostatische Säule bedingten Druck zu ersetzen durch einen hydrodynamischen Druck der Förderflüssigkeit, welcher dann an jenen Bereichen des Förderkanals wieder abgebaut werden kann, in denen die Strömungswiderstände angeordnet sind. Durch diese Massnahme kann auf hohe Türme verzichtet werden, sodass kompakte relativ niedrige Anlagen gebaut werden können. Dadurch lässt sich der konstruktive Aufwand für Stützgerüste vereinfachen und die Probleme der Isolation mit einfacheren Mitteln lösen. Weiter beinhaltet eine solche Anlage den entscheidenden Vorteil, dass der Druck in der Anlage durch den Strömungsdruck der fördernden Flüssigkeit reguliert werden kann.

wodurch sich die Anlage vereinfachen und an wechselnde Packungseigenschaften und wechselnde Bedingungen der Wärmebehandlung anpassen lässt.

Ausführungsbeispiele der Erfindung werden nachfolgend anhand der Zeichnungen näher beschrieben, dabei zeigen:

Figur 1 einen Förderkanal mit als Taschen ausgebildeten Strömungswiderständen, im Längsschnitt;

Figur 2 einen Förderkanal mit zwei Nebenkanälen, in denen Widerstandselemente angeordnet sind, im Längsschnitt;

Figur 3 den Förderkanal der Figur 2 im Schnitt III-III der Figur 2;

Figuren 4 bis 7 verschiedene Widerstandselemente in Ansicht quer zur Strömungsrichtung;

Figur 8 einen Förderkanal mit einem Führungskanal, der zwei Nebenkanäle aufweist, im Querschnitt;

Figur 9 den Förderkanal der Figur 8 im Längsschnitt mit drei angeschlossenen Flüssigkeitskreisläufen; und

Figur 10 eine Gesamtanlage in schematischer Darstellung.

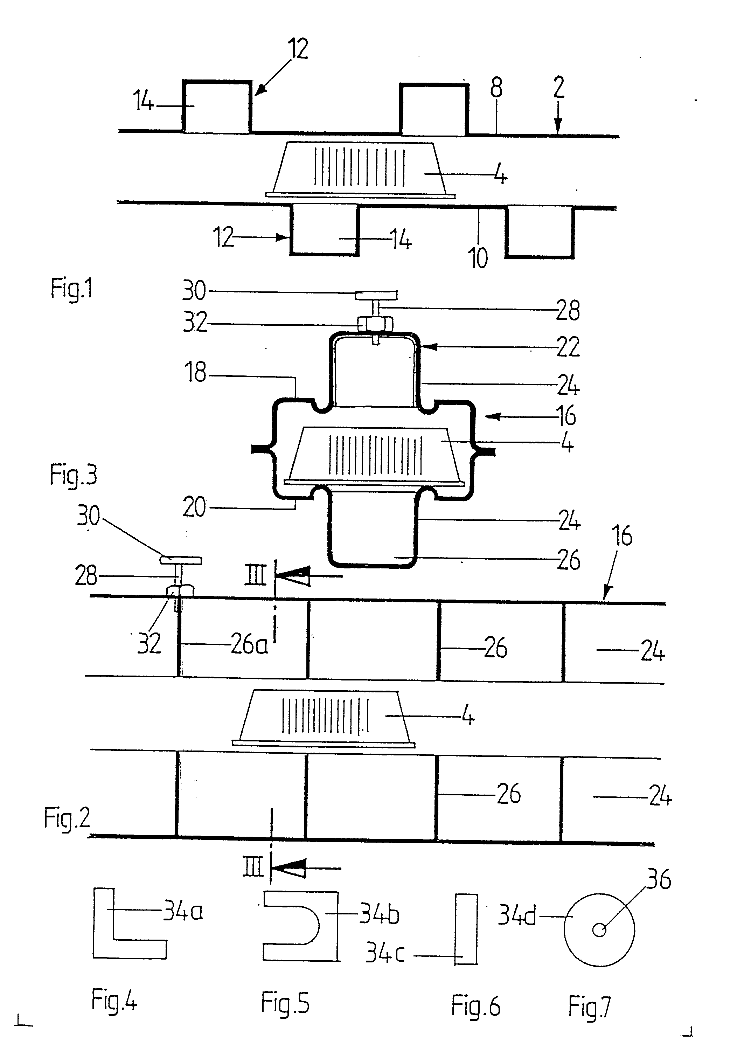

Die Figur 1 zeigt einen Förderkanal 2, in dem als Körper Pakkungen 4 mit einem Flüssigkeitsstrom gefördert werden. Am Förderkanal 2 sind auf einander gegenüberliegenden Seiten 8 und 10 Strömungswiderstände 12 angeordnet, die als nach aussen weisende Taschen 14 ausgebildet sind.

Die Figuren 2 und 3 zeigen einen weiteren Förderkanal 16, der an einander gegenüberliegenden Seiten 18, 20 als Strömungswiderstände 22 dienende Nebenkanäle 24 aufweist, in denen Widerstandselemente 26 quer zur Strömungsrichtung angeordnet sind. Diese Widerstandselemente 26 können im Nebenkanal 24 entweder fest eingebaut sein oder einstellbar sein, wie dies für das Widerstandselement 26a angedeutet ist. Hierzu weist das einstellbare Widerstandselement 26a eine Achse 28 auf, an der ein Handgriff 30 befestigt ist. Eine Feststellschraube 32 dient zur Lagesicherung der gewählten Einstellung des Widerstandselemenetes 26. Die Einstellbarkeit kann auch durch aus-und einfahrbare Widerstandselemente erzielt werden. Besonders zweckmässig ist es, wenn die Einstellung von Hand oder motorisch leicht erzielbar ist, sodass sich eine kontinuierliche Druckregelung ergibt.

Die Figuren 4 bis 7 zeigen verschiedene Widerstandselemente quer zur Strömungsrichtung. Das Widerstandselement 34a der Figur 4 ist L-förmig ausgestaltet. Das Widerstandselement 34b der Figur 5 weist eine U-Form auf. Das Widerstandselement 34c der Figur 6 ist balkenförmig ausgebildet. Das Widerstandselement 34d der Figur 7 besitzt die Form einer Kreisscheibe mit einem zentralen Durchgangsloch 36. Es sind noch zahlreiche weitere Formen der Widerstandselemente möglich.

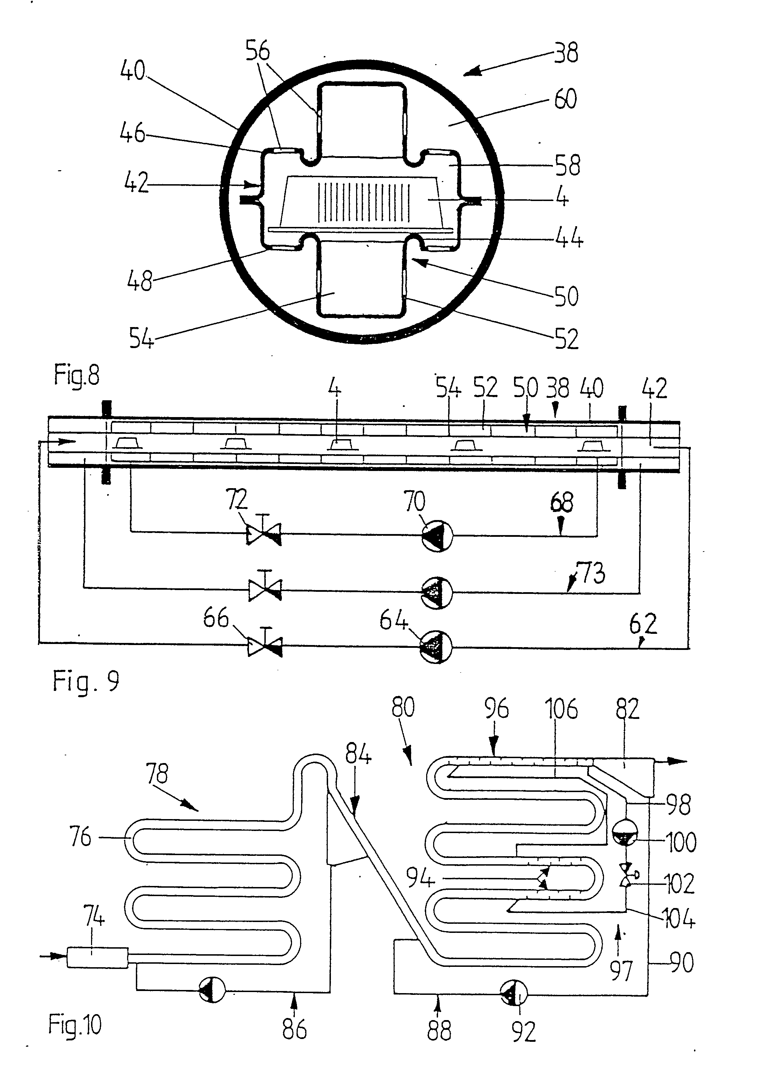

Die Figuren 8 und 9 zeigen einen weiteren Förderkanal 38, der aus einem zylindrischen Mantelrohr 40 gebildet ist, in dem als Einsatz ein Führungskanal 42 für die Packungen 4 angeordnet ist. Der Führungskanal 42 enthält Führungsleisten 44, um den Förderwiderstand der Packung 4 möglichst klein zu halten. Der Führungskanal 42 ist analog dem Ausführungsbespiel der Figuren 2 und 3 an einander gegenüberliegenden Seiten 46, 48 mit Strömungswiderständen 50 ausgestattet, die in Form von Nebenkanälen 52 mit Widerstandselementen 54 ausgebildet sind. Der Führungskanal 42 enthält Oeffnungen 56, über die der Innenraum 58 des Führungskanales 42 mit dem Raum 60 zwischen dem Führungskanal 42 und dem Mantelrohr 40 in Verbindung steht. Der Raum 60 kann ebenfalls oder sogar ausschliesslich nicht näher dargestellte Widerstandselemente enthalten.

Wie insbesondere aus Figur 9 hervorgeht, ist an den Förderkanal 38 ein erster Flüssigkeitskreislauf 62 angeschlossen, der einen Flüssigkeitsstrom stromaufwärts in den Führungskanal 42 einspeist und stromabwärts abzieht. Der Flüssigkeitskreislauf 62 enthält eine Pumpe 64 und ein Regelventil 66, mit dem die Strömungsmenge der Flüssigkeit reguliert werden kann. Ein zweiter Flüssigkeitskreislauf 68 kann ebenfalls in den Führungskanal 42 münden oder am Mantelrohr 40 angeschlossen sein und in den Raum 60 zwischen dem Mantelrohr 40 und dem Führungskanal 42 münden. Auch dieser Flüssigkeitskreislauf enthält eine Pumpe 70 und ein Regelventil 72, um den Flüssigkeitsstrom und damit den Strömungswiderstand zu regulieren. Während der erste Flüssigkeitskreislauf 62 primär zur Förderung der Packungen 4 im Führungskanal 42 dient, regelt der zweite Flüssigkeitskreislauf 68 den Druckabbau durch Aendern der Menge der Flüssigkeit Beide Flüssigkeitskreisläufe können einzeln oder gemeinsam den Strömungswiderstand beeinflussen, welcher dem Förderdruck des Flüssigkeitsstromes entgegen wirkt. Es kann ein dritter Flüssigkeitskreislauf 73 mit Pumpe und Regulierventil sowie gegebenenfalls Wärmetauscher, wie Heizung oder Kühlung, am Mantelrohr 40 angeschlossen sein und primär der Wärmeübertragung dienen.

So lässt sich beispielsweise bei einer Flüssigkeitsgeschwindigkeit von 50 bis 150 m pro Minute und bei in Abständen von 0,2 bis 0,4 Meter angeordneten Widerstandselementen ein Druckabbau $\Delta p = 0,02$ bis $0,2$ bar pro Meter erzielen.

Die Figur 10 zeigt das Schema einer Gesamtanlage. An einer Einlassschleuse 74 werden Packungen in einen Förderkanal 76 eingespeist, der die Packungen einerseits durch einen Sterilisationsbereich 78 und andererseits durch einen Kühlbereich 80 zu einem freien Auslass 82 fördert. Zwischen dem Sterilisationsbereich 78 und dem Kühlbereich 80 ist eine Schleuse 84 angeordnet, die beispielsweise von der in der DE-PS 21 49 122 bekannten Bauart ist. Durch die Schleuse 84 enthält der Sterilisationsbereich 78 und der Kühlbereich 80 jeweils einen eigenen Flüssigkeitskreislauf 86, 88. Der Flüssigkeitskreislauf 88 des Kühlbereiches 80 entspricht dem ersten Flüssigkeitskreislauf 62 der in Figur 9 beschriebenen Art, der die am Auslass 82 abgefangene Förder-bzw. Kühlflüssigkeit, beispielsweise Wasser, über eine Leitung 90 und eine Pumpe 92 dem Förderkanal 76 am Anfang des Kühlbereiches 80 wieder einspeist. Die Kühlflüssigkeit kann gegebenenfalls mittels eines nicht näher dargestellten Kühlgerätes gekühlt werden.

Im Kühlbereich 80 sind Widerstandsbereiche 94, 96 der in Figur 9 dargestellten Art angeordnet, die mit einem zweiten Flüssigkeitskreislauf 97 verbunden sind, der dem zweiten Flüssigkeitskreislauf 68 der Figur 9 entspricht. Am Ende des Widerstandsbereiches 96 wird die Flüssigkeit des zweiten Flüssigkeitskreislaufes 97 über eine Leitung 98 mittels einer Pumpe 100 abgezogen und über ein Regelventil 102 und die Leitung 104 dem ersten Widerstandsbereich 94 eingespeist. Am Ende des ersten Widerstandsbereiches 94 wird die Flüssigkeit über eine Verbindungsleitung 106 abgezogen und am Anfang des Widerstandsbereiches 96 wieder eingespeist.

Bezugszeichenliste

2 Förderkanal
4 Packung
8 Seite
10 Seite
12 Strömungswiderstand
14 Tasche
16 Förderkanal
18 Seite
20 Seite
22 Strömungswiderstand
24 Nebenkanal
26 Widerstandelement
26a Widerstandelement
28 Achse
30 Handgriff
32 Feststellschraube
34a Widerstandelement
34b Widerstandelement
34c Widerstandelement
34d Widerstandelement
36 Durchgangsloch
38 Förderkanal
40 Mantelrohr
42 Führungskanal
44 Führungsleiste
46 Seite
48 Seite
50 Strömungswiderstand
52 Nebenkanal
54 Widerstandelement
56 Oeffnung
58 Innenraum
60 Raum
62 Flüssigkeitskreislauf
64 Pumpe
66 Regelventil
68 Flüssigkeitskreislauf
70 Pumpe
72 Regelventil
73 Flüssigkeitskreislauf
74 Einlassschleuse
76 Förderkanal
78 Sterilisationsbereich
80 Kühlbereich
82 Auslass
84 Schleuse
86 Flüssigkeitskreislauf
88 Flüssigkeitskreislauf
90 Leitung
92 Pumpe
94 Widerstandsbereich
96 Widerstandsbereich
97 Flüssigkeitskreislauf
98 Leitung
100 Pumpe
102 Regelventil
104 Leitung
106 Verbindungsleitung

## Ansprüche

1. Vorrichtung zum hydraulischen Fördern von Körpern, mit einem zwischen einer Einlassschleuse (74) und einem freien Auslass (82) verlaufenden Förderkanal (2, 16, 38, 76), in dem die Körper allein mittels einer durchströmenden Flüssigkeit gefördert werden, dadurch gekennzeichnet, dass der Förderkanal (2, 16, 38, 76) Widerstandsbereiche (94, 96) mit Strömungswiderstände (12, 22, 50) zum Abbau des Druckes der Flüssigkeit enthält.

2. Vorrichtung nach Anspruch 1, dadurch gekennzeichnet, dass der Förderkanal (2) als Strömungswiderstände (12) nach aussen weisende Taschen (14) aufweist.

3. Vorrichtung nach Anspruch 1, dadurch gekennzeichnet, dass der Förderkanal (16, 38) mindestens einen nach aussen weisenden Nebenkanal (24, 52) aufweist, in dem Widerstandselemente (26, 26a, 54) angeordnet sind.

4. Vorrichtung nach Anspruch 1, dadurch gekennzeichnet, dass der Förderkanal (38) einen Führungskanal (42) für die Körper (4) enthält, wobei der Führungskanal (42) mindestens einen Nebenkanal (52) aufweist, in dem Widerstandselemente (54) angeordnet sind.

5. Vorrichtung nach Anspruch 3 oder 4, dadurch gekennzeichnet, dass der Förderkanal (16) oder der Führungskanal (42) an einander gegenüberliegenden Seiten (18, 20, 46, 48) Nebenkanäle (24, 52) mit Widerstandselementen (26, 26a, 54) aufweist.

6. Vorrichtung nach Anspruch 1, dadurch gekennzeichnet, dass der Förderkanal (38) einen Führungskanal (42) für die Körper (4) aufweist, der über Oeffnungen (56) mit dem Raum (60) des Förderkanals (38) in Verbindung steht, in dem Widerstandselemente angeordnet sind.

7. Vorrichtung nach den Ansprüchen 3 bis 6, dadurch gekennzeichnet, dass die Widerstandselemente (26, 26a, 34a, 34b, 34c, 34d, 54) als Lamellen ausgebildet sind, die bezüglich der Strömungsrichtung vorzugsweise einstellbar sind.

8. Vorrichtung nach Anspruch 4 oder 5, dadurch gekennzeichnet, dass der Führungskanal (42) Oeffnungen (56) enthält, die mit dem Raum (60) des Förderkanals (38) in Verbindung stehen.

9. Vorrichtung nach Anspruch 1, dadurch gekennzeichnet, dass der Förderkanal (38, 76) neben einem primären Flüssigkeitskreislauf (62, 88) mindestens bereichsweise einen regelbaren sekundären Flüssigkeitskreislauf (68, 97) aufweist, der mindestens an einen Widerstandsbereich (94, 96) des Förderkanals (38, 76) angeschlossen ist.

10. Vorrichtung nach den Ansprüchen 4 bis 9, dadurch gekennzeichnet, dass der sekundäre Flüssgkeitskreislauf (68, 97) an dem den Führungskanal (42) umgebenden Raum (60) des Förderkanals (38, 76) angeschlossen ist.

11. Verwendung der Vorrichtung nach Anspruch 1 in einer Anlage zur Wärmebehandlung von mit Gut gefüllten Packungen (4).

12. Verwendung nach Anspruch 11, dadurch gekennzeichnet, dass die Anlage einen Erwärmungsbereich (78) und einen Kühlbereich (80) enthält und die Förderflüssigkeit gleichzeitig als Energieübertrager dient.

Fig.1

Fig.2

Fig.3

Fig.4     Fig.5     Fig.6     Fig.7

Fig.8

Fig. 9

Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 501 631 (GATINEAU) | | A 23 L 3/02 |
| | --- | | A 23 L 3/22 |
| A | FR-A-2 506 734 (NEUWEILER) | | |
| | --- | | |
| A | FR-A-2 155 152 (HERO CONSERVEN LENZBURG) | | |
| | --- | | |
| A | NL-A-6 911 760 (URSINA) * & CH-A-502 230 * | | |
| | --- | | |
| A | DE-C- 190 133 (A.A. PINDSTOFTE) | | |
| | --- | | **RECHERCHIERTE SACHGEBIETE (Int. Cl.4)** |
| A | DE-A-2 044 802 (O. NEISS) | | A 23 L |
| | --- | | |
| A | US-A-4 073 226 (R.J. SHULZ) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 10-08-1987 | GUYON R.H. |